# EUROPEAN PATENT SPECIFICATION

(11) **EP 2 610 121 B1**
(45) Date of publication and mention of the grant of the patent: **04.09.2019**
(21) Application number: 12196318.5
(22) Date of filing: 10.12.2012
(51) Int. Cl.: B60T 7/06, B60T 11/18, G05G 1/40

(54) **Brake system of straddle type vehicle**
Bremssystem eines Grätschsitzfahrzeugs
Système de freinage de véhicule de type à enfourcher

(30) Priority: 28.12.2011 JP 2011288817
(43) Date of publication of application: 03.07.2013
(73) Proprietor: Honda Motor Co., Ltd., Tokyo 107-8556 (JP)
(72) Inventor: Yoshizawa, Tomoya, Wako-shi, Saitama 351-0193 (JP); Makuta, Yohei, Wako-shi, Saitama 351-0193 (JP)
(74) Representative: Dehns

(56) References cited:
- EP-A2- 1 886 886
- WO-A1-89/08784
- DE-A1- 1 630 150
- JP-U- H01 157 090

## Description

The present invention relates to a brake system for a straddle type vehicle, with a master cylinder which generates hydraulic pressure when it is subjected to an operational force from a brake pedal.

Brake mechanisms are known (see, for example, Japanese Laid-open Patent Publication No. 2009-67297) in which a master cylinder generates hydraulic pressure when subjected to an operational force from a brake pedal. The brake mechanism has a fluid chamber containing compressible fluid for providing the reaction force on a brake pedal to return it to the position in which it was in before operating the master cylinder. In the mechanism, the reaction force on the brake pedal can be adjusted by regulating the pressure of the compressible fluid inside the fluid chamber.

However, in this brake system, when the reaction force on the brake pedal is adjusted, the pressure of the compressible fluid also has to be adjusted, which makes the adjustment work complicated.

WO 89/08784 discloses a brake system for a truck with an adjustable return spring. Further forms of brake system are disclosed in US 3364818 and JP U1-157090. EP 1886886 discloses means for adjusting the position of a clutch pedal.

The present invention has been achieved in consideration of the above-described circumstances, and aims to provide a brake system for a straddle type vehicle where the reaction force on the brake pedal can be easily adjusted.

According to a first aspect of the invention, there is provided a brake system of a straddle type vehicle which has a brake pedal and a master cylinder generating hydraulic pressure when it receives an operational force from the brake pedal, wherein the system further comprises a rod extending from said master cylinder and inputting the operational force of said brake pedal to said master cylinder; a coil spring coaxially arranged with said rod and providing a reaction force to said brake pedal; and a reaction adjustment mechanism provided on said rod and configured so as to be movable in the axial direction of said rod, such that a length of said coil spring in the axial direction of said rod can be adjusted by changing the position on said rod of said reaction adjustment mechanism; wherein said coil spring is sandwiched by a receiver side retainer abutting on one end of said coil spring and a compression side retainer abutting on the other end of said coil spring; wherein said compression side retainer is configured so as to be movable in the axial direction of said rod by means of a screw engagement; and wherein the distance between said receiver side retainer and said compression side retainer can be adjusted by changing the position of said compression side retainer on said rod, so as to adjust the length of said coil spring; wherein the brake system is characterized in that the reaction adjustment mechanism is formed separately on said master cylinder); and in that said receiver side retainer is formed separately from said master cylinder, is supported on said master cylinder, and is urged against said master cylinder by said coil spring.

With this arrangement, because the coil spring is coaxially arranged with the rod, the length of the coil spring can be adjusted by shifting the reaction adjustment mechanism provided on the rod in the axial direction of the rod, and so the reaction force on the brake pedal can be more easily adjusted compared to the prior art situation where a complicated operation is required to adjust the pressure of the compressible fluid.

Further, the length of the coil spring can be adjusted by screwing, and the reaction force on the brake pedal can be adjusted securely and easily by hand or with a simple tool such as a spanner, even though the reaction force is high.

Furthermore, where the receiver side retainer is formed separately from the master cylinder, there is no need to change the shape of the master cylinder to support the coil spring. The master cylinder can thus keep its general versatility.

More preferably, said rod has an externally threaded input rod extending from said master cylinder; an input side lock nut is screwed onto the input rod; a hollow adjust nut with an internal thread formed on an inner peripheral surface thereof and an external thread on an outer peripheral surface thereof is screwed onto the externally threaded input rod such that the internal thread engages with the input rod; a flange portion formed on the end portion of the adjust nut nearer to said master cylinder is positioned by being abutted on said input side lock nut; and said compression side retainer is screwed onto the external thread of the adjust nut such that said compression side retainer is positioned by abutting on said flange portion.

With this arrangement, the length of the coil spring can be adjusted based on the position of the input side lock nut on the input rod, and so the degree of the reaction force can be easily perceived and the reaction force can be easily adjusted.

More preferably, said adjust nut has a tool operation portion on an end portion further from the rear master cylinder, such that said tool operation portion can be engaged and rotationally operated by a predetermined tool.

Thus, the input side lock nut can be successfully abutted on the adjust nut, and the input rod can be easily screwed with the adjust nut.

In a further preferred form, said rod further comprises a pedal side rod with an external thread screwed into the internal thread of said adjust nut from the end further from said master cylinder, such that the position of said brake pedal can be adjusted according to the screwing position of said pedal side rod in said adjust nut.

Since the pedal side rod can be moved into and out of the adjust nut, and the brake pedal is connected to the pedal side rod, the position of the brake pedal can be adjusted with a simple configuration.

More preferably, a pedal side lock nut is screwed onto the external thread of said pedal side rod such that said pedal side lock nut can be located at a predetermined position, and abuts on said adjust nut according to the screwing position of said pedal side rod in said adjust nut.

Since the pedal side lock nut screwed onto the pedal side rod is abutted on the adjust nut, the pedal side rod can be easily positioned and the position of the brake pedal can be easily adjusted.

Preferably, said brake pedal is rotatably supported on the vehicle body by a pedal rotation axis, and has a connection portion to which said pedal side rod is connected and a pedal tread portion on which a rider presses down with a foot; said connection portion is arranged above said pedal rotation axis and said pedal tread portion is arranged below said pedal rotation axis; and said connection portion is connected to said pedal side rod by a spherical bearing provided on the end portion of said pedal side rod.

Thus, the spherical bearing can preferably operate the brake pedal in the upper and lower direction.

Preferably, said master cylinder and said brake pedal are supported on the same step bracket.

This allows the master cylinder and the brake pedal to be assembled as a sub-assembly, which can then be assembled to the vehicle body on the step bracket.

More preferably, the reaction adjustment mechanism is arranged above the step bracket on the side of the vehicle.

With this arrangement, due to the fact that the reaction adjustment mechanism is exposed to the side of the vehicle above the step bracket, the reaction force can be easily adjusted.

A preferred embodiment of the invention will now be described by way of example only and with reference to the accompanying drawings, in which:
Fig. 1 is a right side view of a motorcycle having a brake system according to the preferred embodiment;
Fig. 2 is a right side view of the brake system;
Fig. 3 is a view of the brake system from above;
Fig. 4 is a cross-sectional view of a part of the brake system;
Fig. 5 is an exploded perspective view of the brake system; and
Fig. 6 is a view explaining the reaction force regulation operation of the brake system.

Hereinafter, a presently preferred embodiment of the present invention will be explained with reference to the drawings. In the following description, directions such as "front", "rear", "right", and "left" and the like are to be understood in the context of the vehicle as in use, unless there is a specific description otherwise. In the drawings, an arrow "FR" indicates the front direction of the vehicle, and an arrow "UP" indicates the upper direction of the vehicle, respectively.

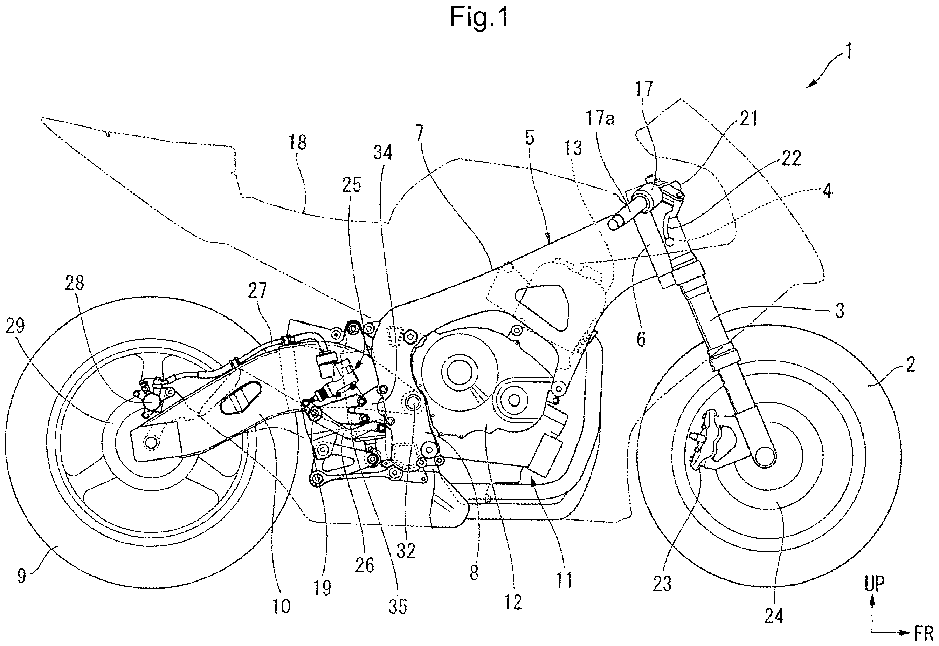

Fig. 1 shows a motorcycle 1 (as an example of a straddle type vehicle) with a brake mechanism according to the preferred embodiment. In the motorcycle 1, a front wheel 2 is supported by front forks 3, and the upper portion of the front forks 3 is steerably and pivotally supported on a head pipe 6 (which is the front end portion of a body frame 5) through a steering stem 4. A pair of right and left main frames 7 extend obliquely rearwardly downward from the head pipe 6. The rear end portions thereof are connected to the upper end portions of a pair of right and left pivot frames 8 which extend vertically. A swing arm 10 is swingably supported on the pivot frames 8 through a pivot axis 32, and supports a rear wheel 9.

An engine 11, which propels the motorcycle 1, is mounted within the body frame 5. In the example shown, the engine 11 is a four cylinder straight engine, whose crank axis extends in the lateral direction of the vehicle, with a cylinder block 13 arranged on a crank case 12. In this example, the output of the engine 11 is transmitted to the rear wheel 9 through a chain-drive mechanism on the left side of the rear portion of the crank case 12.

A steering handlebar 17 is installed on the upper end portion (or a steering stem 4) of the front forks 3. A rider's seat 18 is arranged obliquely rearward and upward of the pivot frame 8. Moreover, a pair of right and left steps 19 (hereinafter referred to as a left step 19 and a right step 19) for the rider are arranged to the rear of the right and left pivot frames 8, respectively. The rider is seated on the seat 18 straddling the vehicle body, puts his or her and left feet on the right and left steps 19 respectively, and takes up a riding posture putting his or her right and left hands on right and left grips 17a of the handlebar 17, respectively.

A front master cylinder 21, which is an oil pressure source for a front wheel brake system, is installed on the handlebar 17, on the right grip 17a side. A brake lever 22 for operating the front master cylinder 21 is arranged forward of the right grip 17a. When the rider grips the brake lever 22 with the hand on the grip 17a (his or her right hand), oil pressure is generated inside the front master cylinder 21. The oil pressure is transmitted through a brake hose and the like (not shown in the drawings) to a front brake caliper 23 supported on the lower end portion of the front fork 3, and the front brake caliper 23 slows the rotation of the front wheel 2 by clamping a front brake disc 24 supported on the front wheel 2.

On the other hand, a rear master cylinder 25, which is an oil pressure source for a rear wheel brake system, is arranged in the vicinity of the right step 19. A brake pedal 26 for operating the rear master cylinder 25 is arranged in the vicinity of the right step 19. When the rider presses down the brake pedal 26 with the foot on the right step 19 (his or her right foot), oil pressure is generated inside the rear master cylinder 25. The oil pressure is transmitted through a brake hose 27 and the like to a rear brake caliper 28 supported on the right side of the rear end portion of the swing arm 10, and the rear brake caliper 28 slows the rotation of the rear wheel 9 by clamping a rear brake disc 29 supported on the right side of the rear wheel 9.

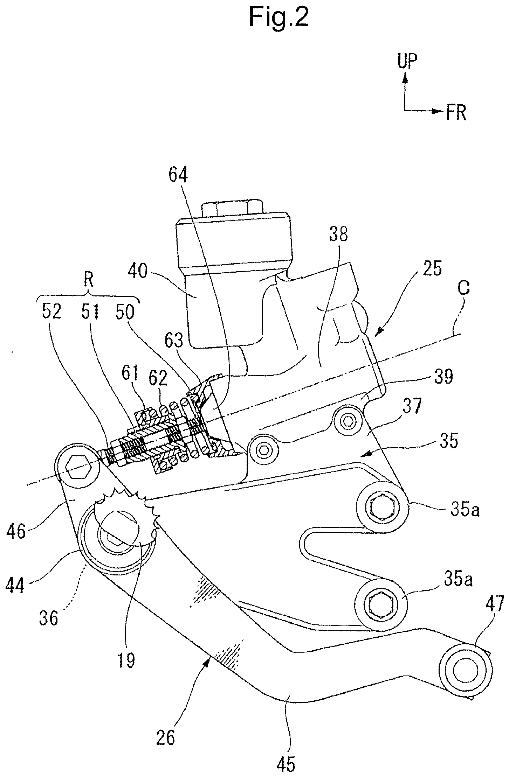

A rearwardly projecting plate 34 is provided in the vertically central portion of the right pivot frame 8. Further, a step bracket 35 is provided so as to extend rearwardly from the plate 34. The right step 19, the rear master cylinder 25, and the brake pedal 26 are all supported on the step bracket 35. The brake system of the present embodiment, which includes the rear master cylinder 25, the brake pedal 26 and the like, will be now described with reference to Figs. 2 to 5.

As shown in Fig. 2, the step bracket 35 has a generally triangular shape, whose angled portion faces rearwardly in side view, and is fixedly fastened to the plate 34 by upper and lower bracket fixing portions 35a formed on the front portion of the plate 34. A step body supporting portion 36 is formed at the rear end portion of the step bracket 35 (the above-mentioned angled portion). The right step 19 is supported on the step body supporting portion 36 so as to project laterally outwardly from the vehicle. Further, the brake pedal 26 is arranged between the right step 19 and the step body supporting portion 36. A cylinder supporting plate 37 extending in the longitudinal direction of the vehicle projects upward from the front side upper portion of the step bracket 35. The rear master cylinder 25 is supported on the cylinder supporting plate 37.

The rear master cylinder 25 has a cylinder body 38 which has a slideable piston inside it (not shown in the drawings), and a bracket 39 which projects radially outwardly relative to the axis C of the cylinder body 38 and extends longitudinally along the axis C is formed on the outer periphery of the cylinder body 38. The bracket 39 and the above-mentioned cylinder supporting plate 37 are fastened together. The rear master cylinder 25 is thus supported on the step bracket 35. The rear master cylinder 25 is positioned above the right step 19 such that the cylinder body 38 extends longitudinally, and obliquely upwards from the rear to the front. In addition, a reservoir tank 40 for supplying the brake fluid (brake hydraulic oil) is integrally provided on the cylinder body 38, on the opposite side of the axis C from the position where the above-mentioned bracket 39 is formed.

A rod R extends rearwardly and downwardly from the rear portion of the cylinder body 38, and also extends from the inside to the outside of the cylinder body 38. In the rod R, the base end portion which is positioned inside the cylinder body 38 is connected to the piston (which is not shown in the drawings) inside the cylinder body 38, and the tip portion which extends to the outside thereof is connected to the brake pedal 26.

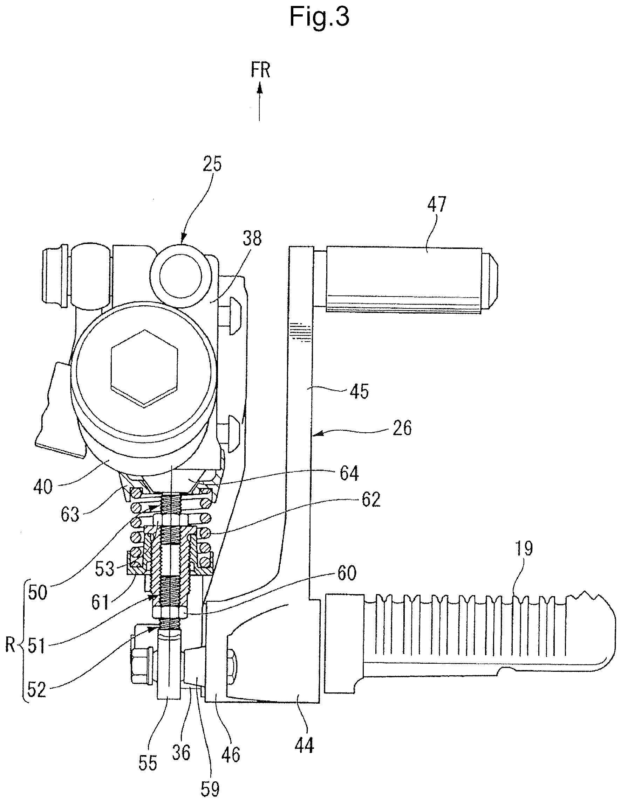

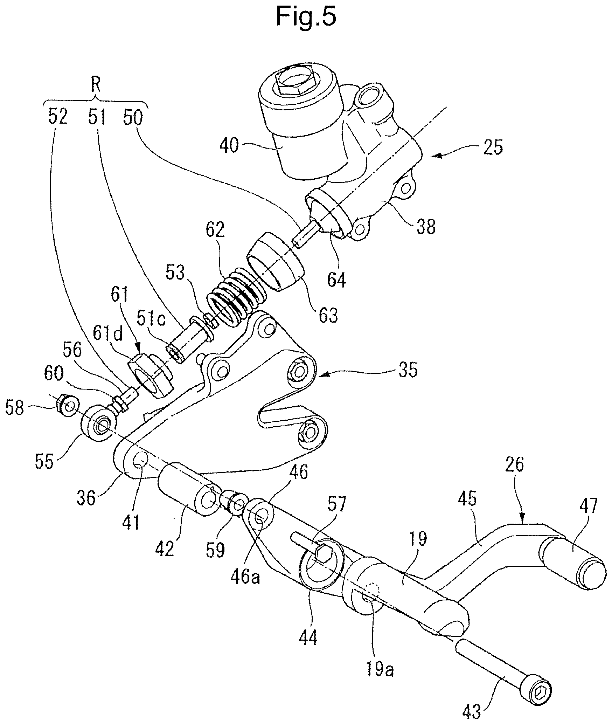

As shown in Fig. 3, the brake pedal 26 is arranged between the step body supporting portion 36 and the right step 19 in the lateral direction of the vehicle. As shown in Fig. 5, a fixing hole 41 which is open to the lateral outer side of the vehicle is formed on the step body supporting portion 36. A bolt inserting hole 19a is formed on the base portion of the right step 19, and extends in the lateral direction of the vehicle. A collar 42 is arranged between the step body supporting portion 36 and the right step 19. A bolt 43 is inserted from the lateral outside of the bolt inserting hole 19a, passes through the collar 42 and is fastened to the fixing hole 41, so that the right step 19 is supported on the step body supporting portion 36. Further, a boss portion 44 located behind the brake pedal 26 is swingably and axially supported on the collar 42, so that the brake pedal 26 is positioned between the step body supporting portion 36 and the right step 19.

As shown in Fig. 2, the brake pedal 26 has a tread side arm portion 45 which extends forwardly and downwardly from the boss portion 44, and an acting end side arm portion 46 which extends rearwardly and upwardly. A rod-like pedal tread portion 47 projects laterally outwardly from the tip portion of the tread side arm portion 45. On the other hand, the tip portion of the acting end side arm portion 46 is connected to the tip portion of the rod R. The extended length (lever arm length) of the tread side arm portion 45 is longer than the extended length of the acting end side arm portion 46. Here, the tip portion of the acting end side arm portion 46 is arranged above the collar 42. The pedal tread portion 47 is arranged below the collar 42. When the rider presses down the pedal tread portion 47 with his or her foot on the right step 19, the force is increased at a predetermined lever ratio and is transmitted to the acting end side arm portion 46. The acting end side arm portion 46 pushes up the rod R, which generates hydraulic pressure inside the rear master cylinder 25.

In the present embodiment, the rod R includes: an input rod 50 which extends from the rear portion of the cylinder body 38 along the axis C; an adjust nut 51 in screw engagement with the input rod 50; and a pedal side rod 52 in screw engagement with the inner periphery of the adjust nut 51 opposite from the master cylinder 25.

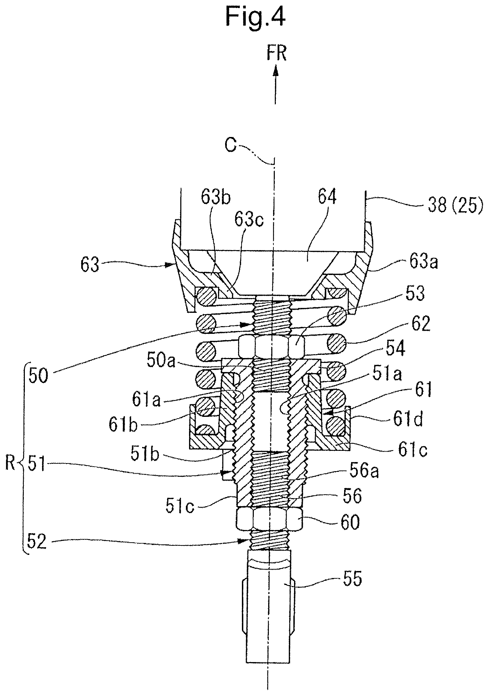

With reference to Fig. 4, the input rod 50 is connected to the piston (which is not shown in the drawings) inside the cylinder body 38. An externally threaded portion 50a is formed on the exposed portion projecting from the cylinder body 38. An input side lock nut 53 is screwed onto the external thread portion 50a and located at a predetermined position. The adjust nut 51 has a hollow cylindrical body, and an internally threaded portion 51a is formed on the inner surface thereof. Simultaneously, an externally threaded portion 51b is formed on the outer surface thereof. The internally threaded portion 51a formed on the inner surface of the adjust nut 51 is in screw engagement with the externally threaded portion 50a of the input rod 50, so that the adjust nut 51 is connected to the input rod 50.

A flange portion 54 projecting radially outwardly is formed on the end portion of the adjust nut 51 which is nearer to the master cylinder 25. The flange portion 54 is abutted on the input side lock nut 53 in order to position the adjust nut 51. Further, a tool operation portion 51c, whose cross-section is formed as a regular hexagon, is formed on the outer surface of the end portion of the adjust nut 51 opposite from the master cylinder 25 (as shown with dots in Fig. 5, for explanatory convenience). The adjust nut 51 can be easily screwed into the input rod 50 by engaging the tool operation portion 51c with predetermined tools (such as a wrench and the like) and then rotating the adjust nut 51.

The pedal side rod 52 is a so-called pillow ball, which has a spherical bearing portion 55 and a rod body 56 projecting from the outer shell of the spherical bearing portion 55. An externally threaded portion 56a is formed on the outer surface of the rod body 56. The externally threaded portion 56a of the pedal side rod 52 is in screw engagement with the internally threaded portion 51a on the inner surface of the adjust nut 51, so that the pedal side rod 52 is connected to the adjust nut 51. In addition, a pedal side lock nut 60, which abuts on the end portion of the adjust nut 51, is screwed onto the externally threaded portion 56a on the outer surface of the rod body 56.

The spherical bearing portion 55 is connected to the acting end side arm portion 46 of the brake pedal 26. With reference to Fig. 5, a bolt inserting hole 46a is formed in the acting end side arm portion 46, a bolt 57 is inserted into the bolt inserting hole 46a and passes through the spherical bearing portion 55, and a nut 58 is screwed onto the end portion of the bolt 57 so that the spherical bearing portion 55 and the acting end side arm portion 46 are connected. In addition, a collar 59 is interposed between the spherical bearing portion 55 and the acting end side arm portion 46. Because the pedal side rod 52 can be is moved into and out of the adjust nut 51 by adjusting the screwing position between the pedal side rod 52 and the adjust nut 51, the position of the brake pedal 26 (and thus the pedal tread portion 47) can be vertically adjusted.

A generally tubular-shaped compression side retainer 61, whose inner surface has an internally threaded portion 61a, is in screw engagement with the externally threaded portion 51b of the adjust nut 51 so as to be movable in along the axis C. A coil spring 62 is provided surrounding the input rod 50 and the adjust nut 51, and is arranged to extend along the same axis (that is, along axis C) as the input rod 50 and the adjust nut 51. The coil spring 62 applies a reaction force to the brake pedal 26, so that when the brake pedal 26 is not being operated it is biased into a specific position.

The compression side retainer 61 includes a tubular-shaped cylindrical portion body 61b whose inner surface is the internally threaded portion 61a; an annular abutting circular portion 61c projecting radially outwardly from the end portion of the cylindrical portion body 61b nearer the pedal side rod 52; and a tubular-shaped holding wall portion 61d, extending from the outer peripheral edge of the abutting circular portion 61c in the same direction as the cylindrical portion body 61b. In addition, as shown in Fig. 5, the holding wall portion 61d is formed such that its cross-section is in the shape of a regular hexagon, so that it can be easily engaged by tools. Moreover, the end portion of the cylindrical portion body 61b nearer the rear master cylinder 25 abuts on the flange portion 54 of the adjust nut 51, so that the compression side retainer 61 is located in the desired position.

One end of the coil spring 62 is abutted on the cylinder body 38 side of the rear master cylinder 25, while the other end of the coil spring 62 is abutted on the abutting circular portion 61c of the compression side retainer 61. The coil spring 62 is thus supported so as to be sandwiched by the cylinder body 38 and the compression side retainer 61. The said other end of the coil spring 62 which abuts on the abutting circular portion 61c is located in position by the holding wall portion 61d.

A tubular-shaped receiver side retainer 63 is fitted onto the end portion of the cylinder body 38 so as to be non-rotatable, and the said one end of the coil spring 62 abuts on the retainer 63. One end of the tubular-shaped receiver side retainer 63 is fitted onto the end portion of the cylinder body 38. The receiver side retainer 63 includes a cylindrical portion body 63a, tapered so that the end nearer the coil spring 62 has a smaller diameter than the end near the cylinder body; an annular receiver portion 63b projecting radially inwardly from the inner surface of the cylindrical portion body 63a; and an annular holding wall portion 63c projecting from the inner peripheral edge of the receiver portion 63b. The one end of the coil spring 62 abuts on the receiver portion 63b and is located in position by the holding wall portion 63c. The receiver side retainer 63 is pressed down onto and supported on the cylinder body 38 by the bias force of the coil spring 62. In addition, the other end side of the receiver side retainer 63 is tapered; however, it may be straight, corresponding to the diameter of the coil spring 62.

A dust boot 64 is arranged inside the receiver side retainer 63. The dust boot 64 covers the base side of the exposed portion of the input rod 50. The input rod 50 penetrates the dust boot 64 and extends toward the brake pedal 26 side.

Now, with reference to Figs. 1 and 2, the layout of the rear brake system according to the present embodiment will be explained. When the rear master cylinder 25 is attached to the vehicle body with the step bracket 35, the rod R and the compression side retainer 61 and the like are positioned above the step bracket 35, and are laterally exposed to the outside. Further, since the step bracket 35 is attached to the right pivot frame 8, the rod R and the compression side retainer 61 and the like are laterally offset to the right from the lateral centreline of the vehicle.

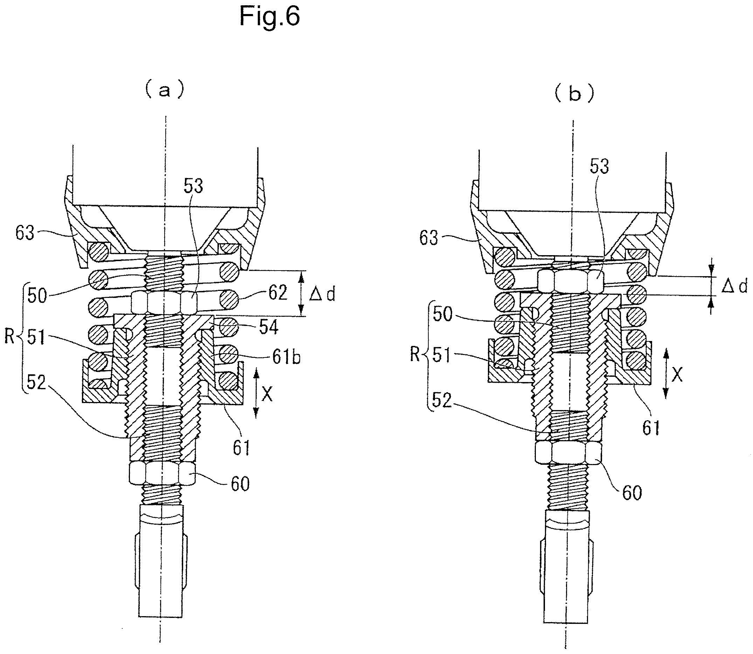

With reference to Figs. 6(a) and 6(b), in the brake system according to the present embodiment configured as mentioned above, the compression side retainer 61 can be moved in the axial direction of the rod R (shown as an arrow X in Fig. 6(a)), and the distance between the receiver side retainer 63 and the compression side retainer 61 can be adjusted. Accordingly, as for example shown in Fig. 6(b), the compression of the coil spring 62 can be adjusted by shortening it, and the reaction force on the brake pedal 26 can thus be adjusted.

When the position of the compression side retainer 61 is changed from the state shown in Fig. 6(a) to the state shown in Fig. 6(b), the axial position of the input side lock nut 53 on the rod R is changed, and the adjust nut 51 is also moved along the axial direction of the rod R. For this operation, the coil spring 62 and the like should be removed and reassembled after positioning of the input side lock nut 53.

The assembly method of the brake system according to the above-mentioned embodiment will now be explained. At the time of assembling, firstly, the receiver side retainer 63 is fitted onto the cylinder body 38 of the master cylinder 25. Next, the input side lock nut 53 is set at the predetermined position on the input rod 50. In order to increase the reaction force, the input side lock nut 53 is located on the back side of the input rod 50, that is, nearer to the cylinder body 38. In order to relatively decrease the reaction force, the input side lock nut 53 is located on the near side of the input rod 50, further away from the cylinder body 38.

Specifically, the degree of the reaction force is confirmed by measuring the distance Δd between the adjust nut 51 and the receiver side retainer 63, as shown in Figs. 6(a), 6(b).

Next, the adjust nut 51 is attached to the input rod 50, and is screwed onto the rod until the end portion of the adjust nut 51 abuts on the input side lock nut 53.

The coil spring 62 is then arranged around the outer periphery of the adjust nut 51. After that, the compression side retainer 61 is screwed onto the adjust nut 51. The compression side retainer 61 is moved to the predetermined position by engaging the outer surface 61d of the compression side retainer 61 with tools including spanners, thus shortening the coil spring 62.

Next, the pedal side rod 52 is screwed into the adjust nut 51, and the pedal side lock nut 60 which is screwed onto the pedal side rod 52 is screwed so as to abut on the adjust nut 51. The brake pedal 26 is connected and positioned by screwing the pedal side lock nut 60. Then, the spherical bearing portion 55 of the pedal side rod 52 is connected to the acting end side arm portion 46 of the brake pedal 26. Here, in order to vertically adjust the position of the pedal tread portion 47 of the brake pedal 26, the screwing position of the pedal side rod 52 should be adjusted.

Furthermore, as mentioned above, the assembly work may be done in a sub-assembly state where the rear master cylinder 25 and the brake pedal 26 are supported on the step bracket 35, or may be done in a state where the rear master cylinder 25, the brake pedal 26, and the step bracket 35 are attached to the vehicle body.

In the present embodiment, the rod R and the compression side retainer 61 and the like are positioned above the step bracket 35 and are exposed to the outside. Since the rod R and the compression side retainer 61 and the like are laterally offset to the right from the lateral centre of the vehicle, the operation can be easily done, even in a state where the rear master cylinder 25, the brake pedal 26 and step bracket 35 are installed on the vehicle body.

As described above, the brake system according to the present embodiment has the rod R extending from the rear master cylinder 25 and inputting the operational force of the brake pedal 26 to the master cylinder 25; the coil spring 62 coaxially arranged with the rod R and providing the reaction force on the brake pedal 26 so as to return it to its non-operating state; and the compression side retainer 61 provided on the rod R as a reaction adjustment mechanism, configured so as to be movable in the axial direction of the rod R. The axial length of the coil spring 62 can be adjusted by changing the position of the compression side retainer 61 on the rod R.

Accordingly, due to the fact that the length of the coil spring 62 can be adjusted by providing the coil spring 62 coaxially with the rod R and by shifting the compression side retainer 61 in the axial direction of the rod R, the reaction force on the brake pedal 26 can be more easily adjusted, compared to the case in which ordinary mechanisms do complicated operation to adjust the pressure of the compressible fluid.

Moreover, in the present embodiment, the coil spring 62 is sandwiched by the receiver side retainer 63 which is located on the master cylinder 25 and abuts on one end of the coil spring 62, and the compression side retainer 61 which abuts on the other end of the coil spring 62, and the compression side retainer 61 is configured so as to be movable in the axial direction of the rod R by screwing the compression side retainer 61 with the rod R. The distance between the receiver side retainer 63 and the compression side retainer 61 is adjusted according to the position of the compression side retainer 61 on the rod R, and the length of the coil spring 62 can be adjusted. According to the configuration, the length of the coil spring 62 can be adjusted by screwing. Even though the reaction force is high, the assembly can be surely and easily done.

Moreover, in the present embodiment, the rod R includes the input rod 50 extending from the rear master cylinder 25, and the adjust nut 51 is screwed onto the input rod 50. An externally threaded portion is formed on the input rod 50. Simultaneously, the input side lock nut 53 is arranged at the desired position by being screwed onto the externally threaded portion. The adjust nut 51 is hollow, and an internally threaded portion thereof is screwed onto the input rod 50, such that the flange portion 54 formed at the end of the adjust nut 51 nearer the master cylinder 25 abuts on the input side lock nut 53. The compression side retainer 61 is screwed onto an externally threaded portion of the adjust nut 51 and abuts on the flange portion 54. With this configuration, the length of the coil spring 62 can be adjusted by changing the position of the input side lock nut 53 on the input rod 50, and so the degree of the reaction force can be easily perceived, and the reaction force can be easily adjusted.

Moreover, in the present embodiment, the adjust nut 51 has the tool operation portion 51c on the end further from the rear master cylinder 25, and this tool operation portion 51c can be engaged and rotationally operated by a predetermined tool. Accordingly, the adjust nut 51 can be easily made to abut on the input side lock nut 53, and simultaneously, the adjust nut 51 can be easily screwed onto the input rod 50.

Moreover, in the present embodiment, the rod R additionally has the pedal side rod 52 which is screwed into the adjust nut 51 from the side further from the master cylinder 25. The position of the brake pedal 26 can be adjusted according to the screwing position of the pedal side rod 52 in the adjust nut 51. Accordingly, as the pedal side rod 52 can be moved into and out of the adjust nut 51 by using the threaded engagement, and the pedal side rod 52 is connected to the brake pedal 26, the position of the brake pedal 26 can be adjusted with a simple configuration.

Furthermore, in the present embodiment, the pedal side lock nut 60 is additionally provided, such that the pedal side lock nut 60 is screwed onto the external thread of the pedal side rod 52 at a desired position and abuts on the adjust nut 51, to locate the screwing position of the pedal side rod 52 in the adjust nut 51. Accordingly, the pedal side rod 52 can be positioned by abutting the pedal side lock nut 60 screwed onto the pedal side rod 52 on the adjust nut 51, and the position of the brake pedal 26 can be easily adjusted.

Moreover, in the present embodiment, the receiver side retainer 63 is formed separately from the rear master cylinder 25, then is biased by the coil spring 62 and is supported on the rear master cylinder 25. Accordingly, as the receiver side retainer 63 is formed separately from the rear master cylinder 25, the rear master cylinder 25 can keep the general versatility.

Moreover, in the present embodiment, the brake pedal 26 is swingably supported on the side of the vehicle by the collar 42 which acts as a pedal rotation axis, and has the acting end side arm portion 46 which is connected to the pedal side rod 52 and the pedal tread portion 47 on which the rider presses down with his or her foot. The acting end side arm portion 46 is arranged above the collar 42, while the pedal tread portion 47 is arranged below the collar 42. The acting end side arm portion 46 is connected to the pedal side rod 52 by the spherical bearing portion 55 provided on the end portion of the pedal side rod 52. Accordingly, the brake pedal 26 can be preferably operated in upper and lower directions by the spherical bearing portion 55.

A presently preferred embodiment of the present invention has been described above; however, the present invention is not limited to the above-described embodiment. For example, the rear master cylinder 25 need not be a cylinder specifically provided for the rear wheel brake, and may be a cylinder for an oil pressure source in a combined brake system that balances front and rear wheel braking forces. Further, in the above-mentioned embodiment, the receiver side retainer 63 is formed separately from the master cylinder 25. However, the portion corresponding to the receiver side retainer 63 may be integrally formed with the rear master cylinder 25.

## Claims

1. A brake system of a straddle type vehicle which has a brake pedal (26) and a master cylinder (25) generating hydraulic pressure when it receives an operational force from the brake pedal (26),
wherein the system further comprises a rod (R) extending from said master cylinder (25) and inputting the operational force of said brake pedal (26) to said master cylinder (25);
a coil spring (62) coaxially arranged with said rod (R) and providing a reaction force to said brake pedal (26); and
a reaction adjustment mechanism provided on said rod (R) and configured so as to be movable in the axial direction of said rod (R),
such that a length of said coil spring (62) in the axial direction of said rod (R) can be adjusted by changing the position on said rod (R) of said reaction adjustment mechanism;
wherein said coil spring (62) is sandwiched by a receiver side retainer (63) abutting on one end of said coil spring (62) and a compression side retainer (61) abutting on the other end of said coil spring (62); wherein said compression side retainer (61) is configured so as to be movable in the axial direction of said rod (R) by means of a screw engagement; and wherein the distance between said receiver side retainer (63) and said compression side retainer (61) can be adjusted by changing the position of said compression side retainer (61) on said rod (R), so as to adjust the length of said coil spring (62);
wherein the brake system is **characterized in that** the reaction adjustment mechanism is formed separately on said master cylinder (25); and
**in that** said receiver side retainer (63) is formed separately from said master cylinder (25), is supported on said master cylinder (25), and is urged against said master cylinder (25) by said coil spring (62).

2. The brake system of a straddle type vehicle according to claim 1,
**characterized in that** said rod (R) has an externally threaded input rod (50) extending from said master cylinder (25); **in that** an input side lock nut (53) is screwed onto the input rod (50); **in that** a hollow adjust nut (51) with an internal thread formed on an inner peripheral surface thereof and an external thread on an outer peripheral surface thereof is screwed onto the externally threaded input rod (50) such that the internal thread engages with the input rod; **in that** a flange portion (54) formed on the end portion of the adjust nut (51) nearer to said master cylinder (25) is positioned by being abutted on said input side lock nut (53); and **in that** said compression side retainer (61) is screwed onto the external thread of the adjust nut (51) such that said compression side retainer (61) is positioned by abutting on said flange portion (54).

3. The brake system of a straddle type vehicle according to claim 2,
**characterized in that** said adjust nut (51) has a tool operation portion (51c) on an end portion further from the rear master cylinder (25), such that said tool operation portion (51c) can be engaged and rotationally operated by a predetermined tool.

4. The brake system of a straddle type vehicle according to claims 2 or 3,
**characterized in that** said rod (R) further comprises a pedal side rod (52) with an external thread screwed into the internal thread of said adjust nut (51) from the end further from said master cylinder (25), such that the position of said brake pedal (26) can be adjusted according to the screwing position of said pedal side rod (52) in said adjust nut (51).

5. The brake system of a straddle type vehicle according to claim 4,
**characterized in that** a pedal side lock nut (60) is screwed onto the external thread of said pedal side rod (52) such that said pedal side lock nut (60) can be located at a predetermined position, and abuts on said adjust nut (51) according to the screwing position of said pedal side rod (52) in said adjust nut (51).

6. The brake system of a straddle type vehicle according to claim 4,
**characterized in that** said brake pedal (26) is rotatably supported on the vehicle body by a pedal rotation axis (42), and has a connection portion (46) to which said pedal side rod (52) is connected and a pedal tread portion (47) on which a rider presses down with a foot; **in that** said connection portion (46) is arranged above said pedal rotation axis (42) and said pedal tread portion (47) is arranged below said pedal rotation axis (42); and **in that** said connection portion (46) is connected to said pedal side rod (52) by a spherical bearing (55) provided on the end portion of said pedal side rod (52).

7. The brake system of straddle type vehicle according to any preceding claim,
**characterized in that** said master cylinder (25) and said brake pedal (26) are supported on the same step bracket (35).

8. The brake system of straddle type vehicle according to claim 7,
**characterized in that** said reaction adjustment mechanism is arranged above said step bracket (35) on the side of the vehicle.

## Patentansprüche

1. Bremssystem eines Grätschsitzfahrzeugs, das ein Bremspedal (26) und einen Hauptzylinder (25) aufweist, der Hydraulikdruck erzeugt, wenn er eine Betriebskraft vom Bremspedal (26) erhält,
wobei das System weiter eine Stange (R) umfasst, die sich vom Hauptzylinder (25) erstreckt und die Betriebskraft des Bremspedals (26) an den Hauptzylinder (25) abgibt;
eine Schraubenfeder (62), die koaxial mit der Stange (R) angeordnet ist und eine Reaktionskraft an das Bremspedal (26) bereitstellt; und
einen Reaktionseinstellungsmechanismus, der an der Stange (R) bereitgestellt und konfiguriert ist, um in der Achsenrichtung der Stange (R) beweglich zu sein,
sodass eine Länge der Schraubenfeder (62) in der Achsenrichtung der Stange (R) durch Ändern der Position des Reaktionseinstellungsmechanismus an der Stange (R) eingestellt werden kann;
wobei die Schraubenfeder (62) zwischen einer aufnahmeseitigen Halterung (63), die an einem Ende der Schraubenfeder (62) anliegt, und einer kompressionsseitigen Halterung (61), die am anderen Ende der Schraubenfeder (62) anliegt, eingefügt ist; wobei die kompressionsseitige Halterung (61) konfiguriert ist, um in der Achsenrichtung der Stange (R) durch einen Schraubeneingriff beweglich zu sein; und wobei der Abstand zwischen der aufnahmeseitigen Halterung (63) und der kompressionsseitigen Halterung (61) durch Ändern der Position der kompressionsseitigen Halterung (61) an der Stange (R) eingestellt werden kann, um die Länge der Schraubenfeder (62) einzustellen;
wobei das Bremssystem **dadurch gekennzeichnet ist, dass** der Reaktionseinstellungsmechanismus separat auf dem Hauptzylinder (25) gebildet ist; und
dass die aufnahmeseitige Halterung (63) separat vom Hauptzylinder (25) gebildet ist, am Hauptzylinder (25) gestützt ist und durch die Schraubenfeder (62) gegen den Hauptzylinder (25) gepresst wird.

2. Bremssystem eines Grätschsitzfahrzeugs nach Anspruch 1,
**dadurch gekennzeichnet, dass** die Stange (R) eine Eingangsstange (50) mit Außengewinde aufweist, die sich vom Hauptzylinder (25) erstreckt; dass eine eingangsseitige Verriegelungsmutter (53) auf die Eingangsstange (50) geschraubt ist;
dass eine hohle Stellmutter (51) mit einem Innengewinde, das an einer inneren Umfangsfläche davon gebildet ist, und einem Außengewinde an einer äußeren Umfangsfläche davon auf die Eingangsstange (50) mit Außengewinde geschraubt ist, sodass das Innengewinde mit der Eingangsstange in Eingriff ist; dass ein Flanschteil (54), der an dem Endteil der Stellmutter (51) näher zum Hauptzylinder (25) gebildet ist, durch Anlegen an die eingangsseitige Verriegelungsmutter (53) positioniert wird; und dass die kompressionsseitige Halterung (61) auf das Außengewinde der Stellmutter (51) geschraubt ist, sodass die kompressionsseitige Halterung (61) durch Anlegen an das Flanschteil (54) positioniert wird.

3. Bremssystem eines Grätschsitzfahrzeugs nach Anspruch 2,
**dadurch gekennzeichnet, dass** die Stellmutter (51) ein Werkzeugbetätigungsteil (51c) an einem Endteil weiter weg vom hinteren Hauptzylinder (25) hat, sodass das Werkzeugbetätigungsteil (51c) mit einem vorbestimmten Werkzeug in Eingriff und durch dieses in Drehung versetzt werden kann.

4. Bremssystem eines Grätschsitzfahrzeugs nach einem der Ansprüche 2 oder 3,
**dadurch gekennzeichnet, dass** die Stange (R) weiter eine pedalseitige Stange (52) mit einem Außengewinde umfasst, das in das Innengewinde der Stellmutter (51) von dem Ende weiter weg vom Hauptzylinder (25) geschraubt ist, sodass die Position des Bremspedals (26) gemäß der Schraubposition der pedalseitigen Stange (52) in der Stellmutter (51) eingestellt werden kann.

5. Bremssystem eines Grätschsitzfahrzeugs nach Anspruch 4,
**dadurch gekennzeichnet, dass** eine pedalseitige Verriegelungsmutter (60) auf das Außengewinde der pedalseitigen Stange (52) geschraubt ist, sodass die pedalseitige Verriegelungsmutter (60) an einer vorbestimmten Position liegen kann und an der Stellmutter (51) gemäß der Schraubposition der pedalseitigen Stange (52) in der Stellmutter (51) anliegt.

6. Bremssystem eines Grätschsitzfahrzeugs nach Anspruch 4,
**dadurch gekennzeichnet, dass** das Bremspedal (26) drehbar auf der Fahrzeugkarosserie durch eine Pedaldrehachse (42) gehalten wird und ein Verbindungsteil (46) aufweist, mit dem die pedalseitige Stange (52) verbunden ist, und ein Pedaltrittteil (47), das ein Fahrer mit einem Fuß nach unten drückt; dass das Verbindungsteil (46) über der Pedaldrehachse (42) angeordnet ist und das Pedaltrittteil (47) unter der Pedaldrehachse (42) angeordnet ist; und dass das Verbindungsteil (46) mit der pedalseitigen Stange (52) durch ein Gelenklager (55) verbunden ist, das am Endteil der pedalseitigen Stange (52) bereitgestellt ist.

7. Bremssystem eines Grätschsitzfahrzeugs nach einem der vorstehenden Ansprüche,
**dadurch gekennzeichnet, dass** der Hauptzylinder (25) und das Bremspedal (26) auf demselben Stufenbügel (35) gehalten werden.

8. Bremssystem eines Grätschsitzfahrzeugs nach Anspruch 7,
**dadurch gekennzeichnet, dass** der Reaktionseinstellungsmechanismus über dem Stufenbügel (35) an der Seite des Fahrzeugs angeordnet ist.

## Revendications

1. Système de freinage d'un véhicule du type à enfourcher qui a une pédale de frein (26) et un maître-cylindre (25) générant une pression hydraulique lorsqu'il reçoit une force opérationnelle de la pédale de frein (26),
dans lequel le système comprend en outre une bielle (R) s'étendant depuis ledit maître-cylindre (25) et introduisant la force opérationnelle de ladite pédale de frein (26) vers ledit maître-cylindre (25) ;
un ressort hélicoïdal (62) agencé coaxialement avec ladite bielle (R) et fournissant une force de réaction à ladite pédale de frein (26) ; et
un mécanisme d'ajustement de réaction fourni sur ladite bielle (R) et configuré de manière à pouvoir se déplacer dans la direction axiale de ladite bielle (R),
de sorte qu'une longueur dudit ressort hélicoïdal (62) dans la direction axiale de ladite bielle (R) peut être ajustée en modifiant la position sur ladite bielle (R) dudit mécanisme d'ajustement de réaction ;
dans lequel ledit ressort hélicoïdal (62) est enserré par un dispositif de retenue côté récepteur (63) venant en butée sur une première extrémité dudit ressort hélicoïdal (62) et un dispositif de retenue côté compression (61) venant en butée sur l'autre extrémité dudit ressort hélicoïdal (62) ; dans lequel ledit élément de retenue côté compression (61) est configuré de manière à pouvoir être déplacé dans la direction axiale de ladite bielle (R) au moyen d'un engagement fileté ; et dans lequel la distance entre ledit dispositif de retenue côté récepteur (63) et ledit dispositif de retenue côté compression (61) peut être ajustée en modifiant la position dudit dispositif de retenue côté compression (61) sur ladite bielle (R), de manière à ajuster la longueur dudit ressort hélicoïdal (62) ;
dans lequel le système de freinage est **caractérisé en ce que** le mécanisme d'ajustement de réaction est formé séparément sur ledit maître-cylindre (25) ; et
**en ce que** ledit dispositif de retenue côté récepteur (63) est formé séparément à partir dudit maître-cylindre (25), est supporté sur ledit maître-cylindre (25), et est poussé contre ledit maître-cylindre (25) par ledit ressort hélicoïdal (62).

2. Système de freinage d'un véhicule du type à enfourcher selon la revendication 1,
**caractérisé en ce que** ladite bielle (R) a une bielle d'entrée filetée extérieurement (50) s'étendant à partir dudit maître-cylindre (25) ; **en ce qu'**un écrou de blocage côté entrée (53) est vissé sur la bielle d'entrée (50) ; **en ce qu'**un écrou d'ajustement creux (51) avec un filetage interne formé sur une surface périphérique interne de celui-ci et un filetage externe sur une surface périphérique externe de celui-ci est vissé sur la bielle d'entrée filetée extérieurement (50), de sorte que le filetage interne vient en prise avec la bielle d'ajustement; **en ce qu'**une portion de bride (54) formée sur la portion d'extrémité de l'écrou d'ajustement (51) plus proche dudit maître-cylindre (25) est positionnée en étant mise en butée sur ledit écrou de blocage côté entrée (53) ; et **en ce que** ledit dispositif de retenue côté compression (61) est vissé sur le filetage externe de l'écrou d'ajustement (51) de sorte que ledit dispositif de retenue côté compression (61) est positionné par mise en butée sur ladite partie de bride (54).

3. Système de freinage d'un véhicule du type à enfourcher selon la revendication 2,
**caractérisé en ce que** ledit écrou d'ajustement (51) a une partie d'actionnement d'outil (51c) sur une partie d'extrémité plus éloignée du maître-cylindre arrière (25), de sorte que ladite partie d'actionnement d'outil (51c) peut être mise en prise et actionnée en rotation par un outil prédéterminé .

4. Système de freinage d'un véhicule du type à enfourcher selon les revendications 2 ou 3,
**caractérisé en ce que** ladite bielle (R) comprend en outre une bielle côté pédale (52) avec un filetage externe vissé dans le filetage interne dudit écrou d'ajustement (51) à partir de l'extrémité la plus éloignée dudit maître-cylindre (25), de sorte que la position de ladite pédale de frein (26) peut être ajustée en fonction de la position de vissage de ladite bielle côté pédale (52) dans ledit écrou d'ajustement (51).

5. Système de freinage d'un véhicule du type à enfourcher selon la revendication 4,
**caractérisé en ce qu'**un écrou de blocage côté pédale (60) est vissé sur le filetage externe de ladite bielle côté pédale (52) de sorte que ledit écrou de blocage côté pédale (60) peut être située dans une position prédéterminée, et bute sur ledit écrou d'ajustement (51) en fonction de la position de vissage de ladite bielle côté pédale (52) dans ledit écrou d'ajustement (51).

6. Système de freinage d'un véhicule du type à enfourcher selon la revendication 4,
**caractérisé en ce que** ladite pédale de frein (26) est supportée en rotation sur la carrosserie de véhicule par un axe de rotation de pédale (42), et a une partie de connexion (46) à laquelle ladite bielle côté pédale (52) est connectée et une partie de surface d'appui de pédale (47) sur laquelle un cycliste appuie avec un pied ; **en ce que** ladite partie de connexion (46) est agencée au-dessus dudit axe de rotation de pédale (42) et ladite partie de surface d'appui de pédale (47) est agencée en dessous dudit axe de rotation de pédale (42) ; et **en ce que** ladite partie de connexion (46) est connectée à ladite bielle côté pédale (52) par un palier sphérique (55) fourni sur la partie d'extrémité de ladite bielle côté pédale (52).

7. Système de freinage d'un véhicule du type à enfourcher selon l'une quelconque des revendications précédentes,
**caractérisé en ce que** ledit maître-cylindre (25) et ladite pédale de frein (26) sont supportés sur le même support de marchepied (35).

8. Système de freinage pour véhicule du type à enfourcher selon la revendication 7,
**caractérisé en ce que** ledit mécanisme d'ajustement de réaction est agencé au-dessus dudit support de marchepied (35) sur le côté du véhicule.
